(19) Europäisches Patentamt
European Patent Office
Office européen des brevets

(11) **EP 1 982 752 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(21) Anmeldenummer: **07007765.6**

(22) Anmeldetag: **17.04.2007**

(51) Int Cl.:
**B01D 15/18** (2006.01)     **B01D 15/24** (2006.01)
**G01N 30/44** (2006.01)     **G01N 30/40** (2006.01)

(54) **Verfahren und Vorrichtung zur chromatographischen Trennung von Komponenten mit teilweiser Rückführung von Gemischfraktionen**

Method and device for chromatographic separation of components with partial recovery of mixed fractions

Procédé et dispositif destinés à la séparation chromatographique de composants avec retour partiel de fractions de mélange

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**22.10.2008 Patentblatt 2008/43**

(73) Patentinhaber: **Max-Planck-Gesellschaft zur Förderung der Wissenschaften e.V.
80539 München (DE)**

(72) Erfinder:
- **Kessler, Lars Christian, Dipl.-Biotechn.
  39112 Magdeburg (DE)**
- **Seidel-Morgenstern, Andreas, Prof. Dr.-Ing.
  39114 Magdeburg (DE)**

(74) Vertreter: **Hannke, Christian
Hannke Bittner & Partner
Patent- und Rechtsanwalte
Ägidienplatz 7
93047 Regensburg (DE)**

(56) Entgegenhaltungen:
**WO-A-2004/014511     WO-A-2005/113101
US-A1- 2003 229 213**

- **BAE ET AL: "Partial-discard strategy for obtaining high purity products using simulated moving bed chromatography" JOURNAL OF CHROMATOGRAPHY, ELSEVIER SCIENCE PUBLISHERS B.V. AMSTERDAM, NL, Bd. 1122, Nr. 1-2, 28. Juli 2006 (2006-07-28), Seiten 161-173, XP005531449 ISSN: 0021-9673**

**Beschreibung**

Die Erfindung betrifft ein Verfahren zur chromatographischen Trennung von Komponenten einer Mehrkomponentenfluidmischung mittels des Simulated Moving Bed-Verfahrens gemäß dem Oberbegriff des Patentanspruches 1. Es wird eine Vorrichtung zur Durchführung des Verfahrens beschrieben.

Derartige Verfahren nach dem aktuellen Stand der Technik werden insbesondere in der pharmazeutischen und chemischen Industrie dazu verwendet, Komponenten eines Stoffgemisches mit hohem Reinheitsgrad auch dann zu trennen, wenn es sich bei dem Stoffgemisch um eine komplexe Mehrkomponentenfluidmischung handelt, deren Komponenten evtl. zusätzlich eine Temperatursensibilität aufweisen. Hierbei wird die unterschiedliche Affinität der zu trennenden Komponenten gegenüber einem Feststoff (vorzugsweise Adsorbensmaterial) für deren Trennung ausgenutzt.

Herkömmlicherweise werden chromatographische Trennungen diskontinuierlich im sogenannten Batch-Verfahren durchgeführt. Bei einem derartigen Batch-Verfahren wird eine mit dem Feststoff gefüllte Kammer (Trennsäule) von einem Lösemittel (Eluens) durchströmt. Es wird eine begrenzte Menge der zu trennenden Probe in einen Lösemittelstrom injiziert. Aufgrund der Unterschiede in der Stärke der Wechselwirkungen wandern die Komponenten verschieden schnell durch die Trennsäule und verlassen diese zu unterschiedlichen Zeitpunkten. Diese Injektion kann erst nach einem bestimmten Zeitraum wiederholt werden, ohne den Trennerfolg der vorherigen Injektion zu beeinflussen.

Für eine kontinuierliche Betriebsweise wird ein Gegenstrom zwischen der Lösungsmittel beinhaltenden flüssigen und der festen Phase erzeugt. Hiefür wird die feste Phase in Gegenrichtung zur flüssigen Phase bewegt.

Bei einer derartigen Betriebsweise im Gegenstrom-Verfahren kann die Mehrkomponentenfluidmischung kontinuierlich in der Mitte der Trennsäule aufgebracht werden. Bei geeignet gewählten Stromverhältnissen von flüssiger zu fester Phase kann die sich mit dem Feststoff bewegende, stärker wechselwirkende Komponente in Richtung eines aus der Trennsäule abgeführten Extraktstromes und die mit der flüssigen Phase bewegende, schwächer wechselwirkende Komponente in Richtung eines ebenfalls abgeleiteten Raffinatstromes geleitet werden.

Die Trennverfahren können in kontinuierlicher Betriebsweise nach dem bekannten Simulated Moving Bed (SMB)-Verfahren betrieben werden. Derartige Verfahren werden auf Vorrichtungen angewendet, die sich in der Regel aus mindestens vier, einen Kreislauf bildenden Trennzonen zusammensetzen, welche aus mindestens einer Kammer oder einem Kammerabschnitt bestehen. Der tatsächliche Gegenstrom der festen Phase wird durch ein periodisches Bewegen des statisch in einzelnen Kammern angeordneten Feststoffes in Gegenrichtung zu dem Strom des Lösemittels simuliert. Dies entspricht dem Moving-Column-Prinzip. Alternativ können bei fixierten Kammern auch die Positionen der Zu- und Abläufe zyklisch versetzt werden. Dies entspricht dem Moving-Port-Prinzip. Die Zeit zwischen zwei Umschaltvorgängen wird als Taktzeit bezeichnet. Die Zonen werden durch zwei Eingänge, jeweils für die Mehrkomponentenfluidmischung und das Lösemittel, sowie durch zwei Ausgänge, jeweils für den Extrakt- und den Raffinatstrom, begrenzt. Die Trennung der Komponenten findet weitestgehend in zwei der vier Zonen statt, wohingegen die zwei weiteren Zonen zur Regeneration der festen und flüssigen Phase dienen.

Bei einem derartigen SMB-Verfahren ergibt sich nach einer bestimmten Zeit ein sich wiederholendes Regime. Dieses wird als zyklisch-stationärer Zustand bezeichnet. In diesem Zustand liegen durch das periodische Schalten hervorgerufene charakteristische, sich nach einer Taktzeit wiederholenden Konzentrationsprofile in den Auslassströmen vor.

US 2 985 589 beschreibt ein derartiges SMB-Verfahren zur kontinuierlichen chromatographischen Trennung von Mehrkomponentenfluidmischungen mit einem fixierten, den Feststoff enthaltenen Adsorbensbett und neu positionierbaren Ein- und Ausgängen.

Das in US 2 985 589 beschriebene Verfahren wird mit konstanten Betriebsparametern, wie den zu- und abgeführten Volumenströmen, der Zeitdauer einer Takteinheit und den Konzentrationen der zugeführten Mehrkomponentenfluidmischung und des Lösemittels, betrieben. Es soll im Folgenden als "konventionelles Verfahren" bezeichnet werden.

US 5 102 553 beschreibt ein SMB-Verfahren, bei dem die zu- und abgeführten Volumenströme der Mehrkomponentenfluidmischung, des Lösemittels, des Extraktstromes, des Raffinatstromes und die der kreislaufinternen Zirkulationsströme zeitveränderlich innerhalb einer Takteinheit gestaltet werden ("Powerfeed"-Verfahren). Hierdurch kann eine Erhöhung der Produktivität gegenüber den SMB-Verfahren mit konstanten Betriebsparametern erreicht werden.

In WO A 0025885 wird ein Prozess vorgeschlagen, der ein asynchrones Umschalten von Zu- und Abläufen vorsieht. Dies entspricht dem VariCol-Verfahren. Im Gegensatz zu den konventionellen SMB-Verfahren werden hierbei die Anschlussstellen der Zu- und Abläufe in verschiedenen Zeitpunkten neu positioniert, so dass sich variable Trennzonenlängen pro Zeiteinheit ergeben. Auf diese Weise wird eine Erhöhung der Produktivität erzielt.

In US 2006/023459 wird eine Variation des VariCol-Verfahrens gezeigt, in der zwischen zwei Zonen die Konzentration des Stromes durch einen zusätzlichen Verfahrensschritt erhöht wird.

WO 2004014511 beschreibt ein SMB-Verfahren, in dem innerhalb einer Takteinheit die Konzentration der zulaufenden Mehrkomponentenfluidmischung verändert wird. Dies entspricht dem ModiCon-Verfahren.

In diesem Verfahren kann durch Zuführen einer höher konzentrierten Mehrkomponentenfluidmischung beispielsweise im vierten Viertel einer Taktzeit eine Steigerung der Produktivität, der Produktkonzentration sowie eine Verringerung des spezifischen Lösemittelverbrauchs erzielt werden.

US 2 985 589, US 5 102 553 und WO 2004014511 beschreiben Verfahren, die auf einem kontinuierlichen Auffangen der austretenden Extrakt- und Raffinatströme beruhen. Diese Verfahren müssen derart betrieben werden, so dass gemittelt über die gesamte Taktzeit eine vorgegebene hohe integrale Reinheit erzielt werden kann. Dies führt bei sehr hohen Zielreinheiten zu Einbußen in der Produktivität.

Alternativ dazu wird in Y.-S. Bae und C.-H. Lee "Partial-discard strategy for obtaining high purity products using simulated movid bed Chromatography", Journal of Chromatography A, 1122: 161 - 173 (2006) ein SMB-Verfahren vorgeschlagen, bei dem innerhalb einer Taktzeit nur ein Teil des austretenden Extrakt- oder Raffinatstroms aufgefangen wird (Fraktionierungsverfahren). Bei dem beschriebenen Verfahren wird der nicht aufgefangene Teil verworfen. Ein Rückführen des nicht aufgefangenen Anteils in den Vorlagetank der initialen Mehrkomponentenfluidmischung wird nur für den Fall vorgeschlagen, wenn dieser Tank groß und der rückzuführende Anteil klein sein, um die Einlaufkonzentration der Mehrkomponentenmischung nicht zu verändern. Das in Journal of Chromatography A, 1122: 161 - 173 (2006) beschriebene Verfahren hat den Nachteil, dass ein teilweises Verwerfen des Auslassstroms zu Einbußen in Produktivität und Ausbeute führt.

Demzufolge liegt der vorliegenden Erfindung die Aufgabe zugrunde, ein Verfahren zur chromatographischen Trennung von Komponenten einer Mehrkomponentenfluidmischung mittels des Simulated Moving Bed-Verfahrens zur Verfügung zu stellen, welches eine hohe Produktivität bei einem hohen vorgegebenen Grad an Reinheit der getrennten Komponenten sowie eine Verringerung der Betriebskosten ermöglicht. Es soll ebenso eine Vorrichtung zur Durchführung des Verfahrens zur Verfügung gestellt werden.

Diese Aufgabe wird verfahrensseitig durch die Merkmale des Patentanspruches 1 und vorrichtungsseitig durch die Merkmale des Patentanspruches 18 gelöst.

Ein wesentlicher Punkt der Erfindung liegt darin, dass erfindungsgemäß bei einem Verfahren zur chromatographischen Trennung von Komponenten einer Mehrkomponentenfluidmischung mittels eines Simulated Moving Bed-Verfahrens der an ersten und/oder zweiten Ausgängen abgeleitete Raffinatstrom und/oder Extraktstrom zumindest teilweise jeweils in mindestens einem Behälter zwischengelagert und in einer Takteinheit dem ersten und/oder zweiten Eingang abwechselnd oder zeitgleich mit der Mehrkomponentenfluidmischung und/oder dem Lösemittel den Kammern oder Kammerabschnitten rückkoppelnd zugeführt werden/wird. Hierfür werden die Mehrkomponentenfluidmischung und mindestens ein Lösemittel einer Mehrzahl von mindestens einen Stoff enthaltenen Kammern oder Kammerabschnitten an dem ersten und zweiten Eingang zugeführt und der Extraktstrom, der mindestens eine erste von der Mehrkomponentenfluidmischung abgetrennte Komponente enthält, sowie der Raffinatstrom, der mindestens eine zweite von der Mehrkomponentenfluidmischung abgetrennte Komponente enthält, aus den Kammern oder Kammerabschnitten an einem ersten und zweiten Ausgang abgeleitet. Die Kammern oder Kammerabschnitte bilden einen geschlossenen Kreislauf und sind somit in Reihen miteinander verbunden. Die Anschlussstellen der jeweils zwischen zwei Kammern oder Kammerabschnitten des Kreislaufs angeordneten ersten und zweiten Ein- und Ausgänge werden nach Ablauf einer zyklischen Takteinheit zwischen zwei weiteren Kammern oder Kammerabschnitten des Kreislaufes neu positioniert.

Mit einem derartigen Verfahren wird zumindest einer der beiden austretenden Ströme zu einem Teil innerhalb einer Takteinheit aufgefangen, woraus sich resultierend pro Auslass mindestens zwei Teilströme ergeben, von denen mindestens einer in mindestens einem Tank gesammelt und dessen/deren Inhalt in einem definierten Zeitraum innerhalb der Taktzeit in einem frei zu wählenden Zulaufregime abwechselnd oder gleichzeitig mit der initialen Mehrkomponentenfluidmischung in die Trennvorrichtung eingebracht wird. Es wird somit der zurückgeführte Strom nicht mit der ursprünglichen Mehrkomponentenfluidmischung vermischt. Vielmehr werden die Unterschiede in den Konzentrationen der Komponenten und dem Verhältnis dieser zueinander erfindungsgemäß bewusst ausgenutzt, um eine Steigerung der Reinheit zu erzielen. Gegenüber dem ModiCon-Verfahren wird, wenn nicht die initiale Mehrkomponentenfluidmischung in die Anlage eingebracht wird, eine bereits angetrennte Fraktion eingebracht. In dieser ist das Verhältnis der Komponenten zugunsten mindestens einer Komponente verschoben. Das ModiCon-Verfahren beruht auf einem Ausnutzen von Nichtlinearitäten der Adsorbtionsisotherme, welches als Einschränkung bei dem Gegenstand der vorliegenden Erfindung nicht gegeben ist.

Es wird somit der abgezweigte Strom in einem oder mehreren Behälter, beispielsweise in Form von Tanks, gesammelt und anschließend innerhalb eines sich zyklisch wiederholten definierten Zeitraumes innerhalb der Taktzeit in einem definierten Einspeiseregime vorzugsweise abwechselnd mit den eigentlichen zugeführten Mehrkomponentenfluidmischungen in die Vorrichtung eingebracht. Der nicht rückgeführte Teilstrom, der den vorgegebenen Reinheitsgrad erreicht, wird aus dem System abgeführt und in einem hierfür vorgesehenen Speichermedium aufgefangen. Diese Vorgehensweise kann die Produktivität des Prozesses für gegebene Reinheiten steigern.

Erfindungsgemäß wird somit die Mehrkomponentenfluidmischung, der Inhalt mindestens eines der Behälter (Recycletank), der für die Lagerung des zurückzuführenden Anteils des Raffinat- und/oder Extraktstromes vorgesehen ist und der somit mindestens eine der Komponenten enthält und mindestens ein Lösemittel einer Mehrzahl von mindestens einem Feststoff, vorzugsweise Adsorbensmaterial, enthaltenden Kammern oder Kammerabschnitten an einem ersten oder zweiten Eingang zugeführt. Hierbei wird innerhalb der Taktzeit zu einem definierten Zeitpunkt der Zulauf von entweder einem Behälter, der ausschließlich die Mehrkomponentenfluidmischung enthält, auf mindestens einen Recycletank oder von mindestens einem Recycletank auf den Behälter der Mehrkomponentenfluidmischung umgeschaltet. Dies geschieht mittels eines Ventils. Zeitpunkt und Reihenfolge einer derartigen Umschaltung haben einen Einfluss auf die Trennleistung der das erfindungsgemäße Verfahren umsetzenden Vorrichtung.

Innerhalb der Taktzeit wird mindestens einer der aus der Vorrichtung abgeleiteten Komponenten bzw. Auslassströme in mindestens einen der Recycletanks umgeleitet.

Nach Ablauf einer sich zyklisch wiederholenden Taktzeit werden die Kammern durch ein Multipositionsventil um eine Position in Gegenrichtung zum Strom der fluiden Masse verschoben. Alternativ werden die Anschlussstellen der jeweils zwischen zwei Kammern und Kammerabschnitten des Kreislaufs angeordneten ersten und zweiten Ein- und Ausgänge nach Ablauf einer zyklischen Taktzeit zwischen zwei weiteren Kammern oder Kammerabschnitten des Kreislaufs neu positioniert.

Es ist ebenso ein Betrieb in einem offenen Kreislauf ("Open Loop-SMB") möglich. In diesem Fall kann die Regenerationszone der Flüssigphase weggelassen werden. Die Anzahl der Zonen verringert sich auf drei.

Vorteilhaft kann der Gegenstand der vorliegenden Erfindung auf herkömmliche SMB-Verfahren und sie nutzende Vorrichtungen angewendet werden. Auch eine Kombination des erfindungsgemäßen Verfahrens mit Verfahren, die innerhalb einer Taktzeit den Volumenstrom der zulaufenden Mehrkomponentenfluidmischung variieren ("Powerfeed") ist möglich. Für den Fall des Vorliegens von nichtlinearen Adsorptionsisothermen ist ebenso eine Kombination mit dem ModiCon-Verfahren möglich. Ebenso kann das erfindungsgemäße Verfahren für Prozesse mit asynchronen Schaltzeiten ("VARICOL") verwendet werden.

Die rückkoppelnde Zuführung des abgeleiteten Raffinatstromes und/oder des abgeleiteten Extraktstromes kann innerhalb einer der erfolgten Ableitung nachfolgenden Takteinheit durchgeführt werden oder innerhalb derselben Takteinheit stattfinden.

Gemäß einer bevorzugten Ausführungsform wird in mindestens einem ersten Zeitabschnitt der Takteinheit der gesamte abgeleitete Raffinatstrom und/oder Extraktstrom als Produkt mit gewünschtem Reinheitsgrad abgeführt und in einem mindestens zweiten Zeitabschnitt der Takteinheit der gesamte abgeleitete Raffinatstrom und/oder Extraktstrom rückkoppelnd zugeführt.

Sowohl der Druck als auch die Temperatur der zugeführten Mehrkomponentenfluidmischung und/oder des Lösemittels können innerhalb einer Takteinheit stufenweise und/oder kontinuierlich verändert werden.

Die Zusammensetzung des Lösemittels sowie der Gehalt mindestens eines zusätzlich miteingebrachten Modifikators in der Mehrkomponentenfluidmischung können vorzugsweise stufenweise und/oder kontinuierlich verändert werden.

Es wird gemäß einer bevorzugten Ausführungsform mindestens ein Feststoff verwendet, der dafür geeignet ist, in den einzelnen Kammern oder Kammerabschnitten unterschiedliche Wanderungsgeschwindigkeiten der einzelnen Komponenten der Mehrkomponentenfluidmischung hervorzurufen. Hierbei kann es sich um ein Adsorbensmaterial handeln.

Gemäß einer bevorzugten Ausführungsform wird als Lösemittel eine Mischung aus einer Mehrzahl von Fluiden und/oder eine Mischung mindestens eines Fluids mit einem nieder- oder hochmolekularen Modifikator verwendet.

Als Lösemittel und/oder Mehrkomponentenfluidmischung kann ein Gas oder eine Mischung aus einer Mehrzahl von Gasen verwendet werden, das/die im überkritischen oder unterkritischen Zustand ist/sind.

Das Lösemittel kann ebenso zu trennende Komponenten enthalten. Hierbei weist das Lösemittel mit den zu trennenden Komponenten und das Lösemittel ohne die zu trennenden Komponenten verschiedene Zusammensetzungen und/oder Fähigkeiten hinsichtlich einer Beeinflussung eines Bindungsverhaltens der zu trennenden Komponenten gegenüber dem Feststoff auf.

In den Kammern oder Kammerabschnitten kann eine chemische Reaktion zur Herstellung und Trennung von den Komponenten durchgeführt werden.

Die Anschlussstellen der ersten und zweiten Ein- und Ausgänge werden zu verschiedenen Zeitpunkten neu positioniert.

Mindestens ein Volumenstrom der Mehrkomponentenfluidmischung des Lösemittels, des Extraktstromes, des Raffinatstromes und kreislaufinterner Zirkulationsströme innerhalb einer Takteinheit werden stufenweise und/oder kontinuierlich verändert.

Es wird eine Vorrichtung zur Durchführung eines derartigen Verfahrens gezeigt, welche vorteilhaft aus mindestens vier Kammern mit dazwischenliegenden Ein- bzw. Ausgängen besteht. Zur Abzweigung desjenigen Anteils des abgeleiteten Raffinat- oder Extraktstromes ist zusätzlich ein erstes Ventil, welches zwischen dem aus der Vorrichtung abzuführenden Strom und dem rückzuführenden Strom umschaltet, und ein zweites Ventil, welches zwischen der zuzuführenden Mehrkomponentenfluidmischung und dem in die Vorrichtung rückzuführenden Strom umschaltet, angeordnet. Zwischen dem ersten und zweiten Ventil ist mindestens ein Behälter zum Zwischenspeichern bzw. Zwischenlagern des abgezweigten Stromes angeordnet.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:

Fig. 1 in einer schematischen Darstellung eine Vorrichtung zur Durchführung eines Verfahrens zur chromatographischen Trennung von Komponenten gemäß dem aus dem Stand der Technik bekannten SMB-Verfahren nach dem Moving Column-Prinzip;

Fig. 2 in einer schematischen Darstellung eine Vorrichtung zur Durchführung eines Verfahrens zur chromatographischen Trennung von Komponenten gemäß dem aus dem Stand der Technik bekannten SMB-Verfahren gemäß dem Moving-Port-Prinzip;

Fig. 3 in einem Diagramm beispielhaft Konzentrationsprofile an einem Raffinatausgang einer das herkömmliche SMB-Verfahren verwendenden Vorrichtung;

Fig. 4 in einem Diagramm beispielhaft Konzentrationsprofile an einem Extraktausgang einer das herkömmliche SMB-Verfahren verwendenden Vorrichtung;

Fig. 5 in einem Diagramm beispielhaft den Verlauf eines integralen und differenzialen Reinheitsgrades der Zielkomponente im Raffinatstrom innerhalb einer Taktzeit bzw. Takteinheit in einem herkömmlichen SMB-Verfahren;

Fig. 6 in einer schematischen Darstellung eine Vorrichtung zur Durchführung des erfindungsgemäßen Verfahrens gemäß einer Ausführungsform der Erfindung;

Fig. 7 in einem Diagramm beispielhaft Konzentrationsprofile des Raffinatstromes einer das erfindungsgemäße SMB-Verfahren verwendenden Vorrichtung; und

Fig. 8 in einem Diagramm beispielhaft Konzentrationsprofile des Extraktstromes einer das erfindungsgemäße SMB-Verfahren verwendenden Vorrichtung.

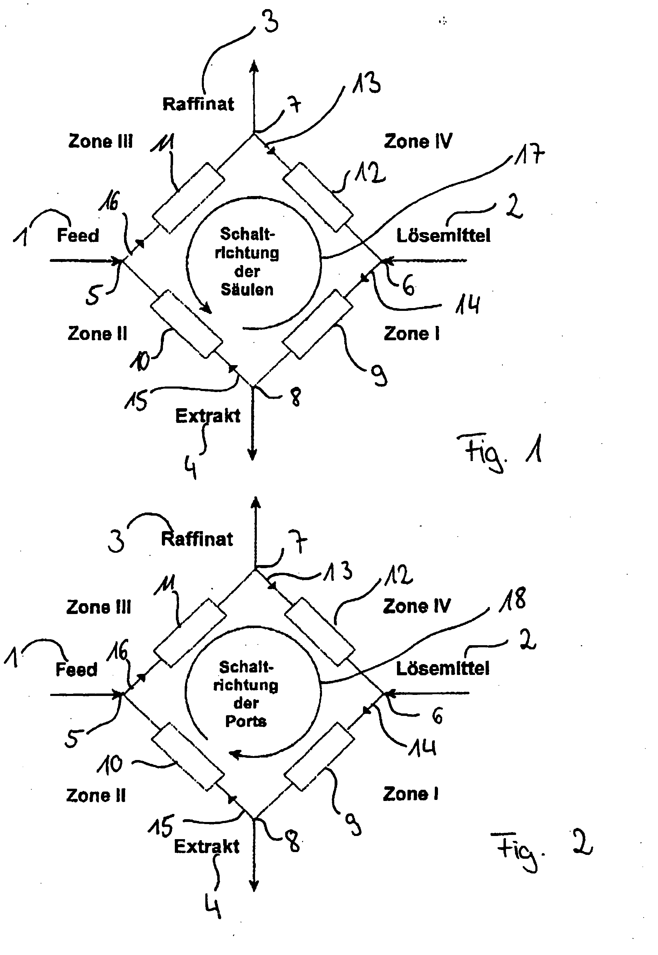

In Fig. 1 wird in einer schematischen Darstellung eine Vorrichtung zur Durchführung eines Verfahrens zur chromatographischen Trennung gemäß dem SMB-Verfahren nach dem Stand der Technik gezeigt. Eine Mehrkomponentenfluidmischung (Feed) 1 wird ebenso wie ein Lösemittel (Eluens) 2 an Eingängen 5 beziehungsweise 6 zugeführt.

Ein Raffinatstrom 3 und ein Extraktstrom 4 werden an Ausgängen 7 beziehungsweise 8 der Vorrichtung entnommen. Die Vorrichtung besteht aus insgesamt vier als Trennzonen agierende Kammern 9, 10, 11 und 12, welche reihenartig miteinander zu einem Kreislauf verbunden sind. Zwischen den Kammern 9, 10, 11 und 12 sind die Anschlussstellen für die Eingänge 5, 6 und die Anschlussstellen für die Ausgänge 7, 8 vorhanden.

Ein Feststoff liegt fixiert in mindestens einer der vier Kammern 9 - 12 verteilt vor, wobei die Kammern unterschiedlich schnell von dem Lösemittel durchströmt werden. Um den Gegenstrom der festen Phase zu erzeugen, werden die Kammern periodisch nach dem Verstreichen einer Taktzeit bzw. innerhalb einer Takteinheit in Gegenrichtung zu dem Strom der flüssigen Phase bewegt. Die zu trennende Mehrkomponentenfluidmischung wird hierbei der Vorrichtung kontinuierlich mittig zugeführt.

Durch die Positionen der Ein- und Ausgänge werden vier Zonen festgelegt, in denen durch einen jeweils anderen Volumenstrom der Flüssigphase eine andere Relativgeschwindigkeit von flüssiger und fester Phase vorliegt. Bei geeigneter Einstellung dieser Relativgeschwindigkeiten bewegen sich stärker adsorbierende Komponenten mit der festen Phase in Richtung eines abgeleiteten Extraktstromes und schwächer adsorbierende Komponenten mit dem Lösemittel in Richtung eines abgeleiteten Raffinatstromes.

Die Trennung der Komponenten findet weitestgehend in den Zonen II und III statt, wohingegen die Zonen I und IV zur Regeneration des Feststoffes, der beispielsweise ein Adsorbensmaterial sein kann, und des Lösemittels dienen.

Mit dem Pfeil 17 wird die Richtung des Column-Switching, also das Moving Column-Prinzip gezeigt.

Die in Fig. 2 wiedergegebene Vorrichtung entspricht der in Fig. 1 wiedergegebenen Vorrichtung mit der Ausnahme, dass mittels des Pfeiles 18 die Richtung des Port-Switchings, also das Moving-Port-Prinzip gezeigt wird.

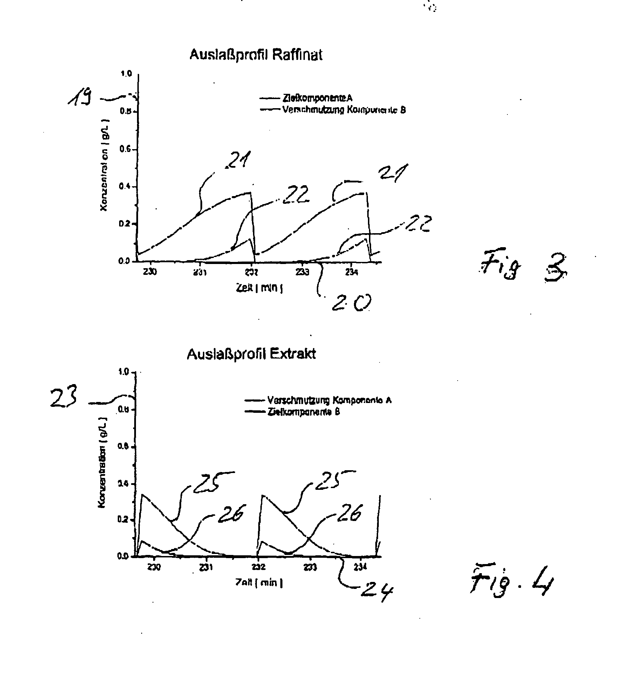

In Fig. 3 wird in einem Diagramm das Konzentrationsprofil an dem Raffinatauslass bei einer das herkömmliche SMB-Verfahren verwendenden Vorrichtung wiedergegeben. Über die Ordinate 19 wird die Konzentration des Raffinatstromes, also einer Zielkomponente A gemäß Bezugszeichen 21 und die anteilige Verschmutzungskomponente B mit dem Bezugszeichen 22 wiedergegeben. Über die Abszisse 20 ist der zeitliche Verlauf der Konzentration aufgetragen.

Der zeitliche Verlauf entspricht zwei vollständigen Takteinheiten bzw. zwei vollständigen Taktzeiten. Die zu trennenden Komponenten können in der Mehrkomponentenfluidmischung in einer hohen Konzentration oder ungelöst vorliegen und vor der Anwendung des SMB-Verfahrens auf eine bestimmte Konzentration verdünnt bzw. gelöst werden. Beispielsweise liegen beiden Komponenten in gleicher Konzentration vor. Die hierbei angewandten Bedingungen sind in einer nachfolgenden Tabelle 1 und die hierbei verwendeten Leistungsparameter in einer nachfolgenden Tabelle 2 zusammengefasst.

In Fig. 4 wird in einem Diagramm, in dem ebenso die Konzentration 23 über den Zeitverlauf 24 aufgetragen ist, der Extraktauslass in seinem Profil wiedergegeben, also der zeitliche Konzentrationsverlauf 25 der Zielkomponente B und der zeitliche Konzentrationsverlauf 26 der anteiligen Verschmutzungskomponente A.

Durch die Umschaltvorgänge wird beim SMB-Verfahren ein zyklisch stationärer Zustand erreicht. In diesem Zustand sind an beiden Auslässen sich zyklisch gleichbleibend wiederholende Konzentrationsprofile zu erkennen. Typischerweise kann bei erfolgreichem Betrieb ein Auftreten der unerwünschten Komponente erst gegen Ende, wie die Komponente B im Raffinatstrom oder nur am Anfang, wie die Komponente A im Extraktstrom, einer Taktzeit gesehen werden.

Die austretenden Ströme werden über den gesamten Zeitraum aufgefangen. Integral gemittelt soll über die Dauer des gesamten Taktes und somit über die gesamte Prozessdauer eine Reinheit von beispielsweise 88 Gew-% an beiden Auslässen erzielt werden.

Eine Taktzeit kann nun in beliebig kurze Unterabschnitte unterteilt werden. Zu jedem dieser Zeitpunkte können die differenzielle und die bis zu diesem Zeitpunkt erzielte integrale Reinheit an den beiden Auslässen bestimmt werden. Die differenzielle Reinheit gibt das Verhältnis der Konzentration von Zielkomponente und mindestens einer aus dem betrachteten Auslass austretenden Nicht-Zielkomponente zu dem aktuellen Zeitpunkt an. Die integrale Reinheit kann das Verhältnis von Zielkomponente und mindestens einer aus dem betrachteten Auslass austretenden Nicht-Zielkomponenten von dem Anfang des Taktes bis zu dem aktuellen Zeitpunkt angeben.

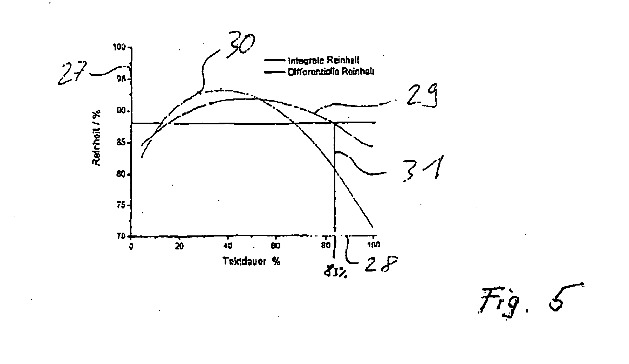

In Fig. 5 wird in einem Diagramm der Reinheitsgrad in % gemäß der Ordinate 27 und die Taktdauer in % gemäß der Abszisse 28 von der integralen Reinheit 29 und der differenziellen Reinheit 30 für den Raffinatstrom wiedergegeben. Es ist deutlich zu erkennen, dass die integrale Reinheit den Schwellenwert der gewünschten Zielreinheit bei 83,0 % der Taktdauer unterschreitet (31).

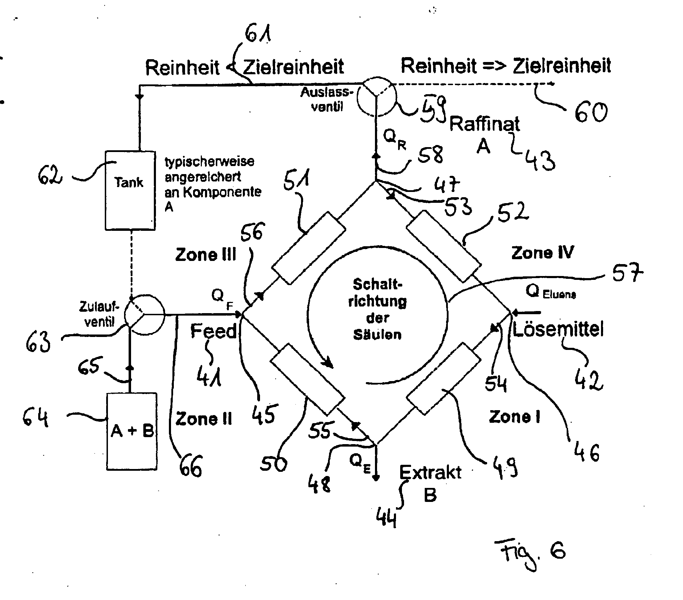

In Fig. 6 ist in einer schematischen Darstellung eine Vorrichtung zur Durchführung des erfindungsgemäßen Verfahrens gemäß einer Ausführungsform der Erfindung dargestellt. Wiederum wird eine Mehrkomponentenfluidmischung 41 an einem Eingang 45 und ein Lösemittel 42 an einem Eingang 46 der Vorrichtung zugeführt. Ebenso wird ein Raffinatstrom 43 an einem Ausgang 47 und ein Extraktstrom 44 an einem Ausgang 48 abgeleitet.

Die Vorrichtung besteht wiederum aus insgesamt vier Kammern 49, 50, 51 und 52, die reihenartig in einem geschlossenen Kreislauf miteinander verbunden sind. Mit dem Bezugszeichen 57 wird die Richtung des Column-Switching wiedergegeben.

Mittels der Pfeile 53, 54, 55 und 56 wird der Strömungsverlauf innerhalb der Kammern und des hierdurch gebildeten Kreislaufes gezeigt.

Die Ableitung 58 des Raffinatstromes 43 am Ausgang 47 wird gemäß dieser Ausführungsform der Erfindung in ein Auslassventil 59 übergeleitet, indem eine Umschaltung in Abhängigkeit davon stattfindet, ob ein Raffinatstrom mit der erforderlichen Reinheit der getrennten Komponente oder der nicht erforderlichen Reinheit vorliegt. Bei Vorliegen der gewünschten Reinheit findet eine Umschaltung zum Abführen der getrennten Komponente gemäß dem Bezugszeichen 60 statt. Bei Nichtvorliegen der geforderten Reinheit findet eine Umschaltung in Richtung 61 statt, so dass dieser abgetrennte Anteil des Raffinatstromes in einen Tank bzw. Behälter 62, in welchem sich nun typischerweise eine Flüssigkeit, die mit einer Komponente A angereichert ist, befindet. Bei Erreichen der Taktzeit erfolgt ein Zurückschalten auf Zustand 60.

Ein weiteres, als Zulaufventil ausgebildetes Ventil 63 wird in Abhängigkeit davon umgeschaltet, ob der abgetrennte Raffinatstrom, welcher in dem Tank 62 bevorratet ist, über den Eingang 45 in die Kammern zurückgeleitet werden soll, oder über eine Zuleitung 65 die anfängliche Mehrkomponentenfluidmischung 41 aus einem Vorratstank 64 zugeleitet werden soll. Dies geschieht über eine Zuleitungsleitung 66.

Es kann mit einer derartigen Vorrichtung eine Kombination von einem nur zu einem Zeitabschnitt der Taktzeit erfolgenden Auffangen von einem Raffinatstrom und einem wieder Einbringen des aufgefangenen und zwischengespeicherten Anteils zu einem späteren Zeitpunkt innerhalb einer Taktzeit anstelle der ursprünglichen Mehrkomponentenfluidmischung vorteilhaft angewendet werden. Werden z. B. die aus Fig. 5 ersichtlichen 17 % der Takteinheit, die die Reinheitsanforderungen nicht erfüllen über eine derartige Rückkoppelung des Raffinatstromes wieder den Kammern zugeführt, so kann eine verbesserte Trennung erreicht werden. Dies geht aus nachfolgenden Tabellen 1 und 2 hervor.

Tabelle 1

| | Konventionelle Auslegung[1] | Fraktionierungs-verfahren[2] | Erfindungsgemäßes Verfahren |
|---|---|---|---|
| Säulenanzahl | | 4 | |
| Säulenanordnung | | 1/1/1/1 1 | |
| Säulendimensionen | | I=10; d=1; | |
| Totale Porosität der Säulen $\varepsilon$ | | 0,667 | |
| Bodenzahl $N$ pro Säule | | 40 | |
| $K^A$, $K^B$ | | 5,078, 5,718 | |
| Volumenstrom in Zone I | | 9,999 mL/min | |
| Konzentration im Initialfeed [g/L] | | Jeweils 1 | |
| Mindesteinheit in beiden Auslässen | | 88%/88% | |
| Tankvolumen [mL] | - | - | 0,171 |
| Feedstrom $Q_F$ [mL/min] | 0,225 | 0,698 | 0,494 |
| Taktzeit $T_S$ [min] | 2,33 | 2,25 | 2,12 |
| Extraktstrom $Q_E$ [mL/min] | 1,80 | 1,51 | 1,11 |
| Raffinatstrom $Q_R$ [mL/min] | 0,79 | 1,51 | 1,11 |
| Lösemittelstrom $Q_{Eluens}$ [mL/min] | 2,36 | 2,33 | 1,73 |
| Feedkonzentration $c^F$ [g/L] | 1 / 1 = konstant | 1 / 1 = konstant | 0,68 / 0,4 (aus Recycletank) I 1/1 |
| Masseneintrag aus Vorlagebehälter pro Minute [mg/min] | 0,225 | 0,698 | 0,427 |
| Zulaufzeitraum aus Recycletank $T_{zulauf}$ [min] | - | - | 0,29 |
| Sammelzeitraum in den Produkttank $T_{cut}$ [min] | | 1,81 | 2,02 |
| Recyclezeitraum in den Recycletank $T_{recycle}$ [min] | | - | 0,1 |
| m-Ströme [-] | 6,9 / 5,3 / 5,5 / 4,8 | 6,6 / 5,3 / 5,9 / 4,6 | 6,1 / 5,2 / 5,6 / 4,7 |
| Schnittpunkte [-] | - | 17 [von 23] | 21 [von 22] |
| Zulaufpunkte [-] | - | - | 3 [von 22] |
| Volumendifferenz | - | - | -0,0357 |

(fortgesetzt)

| | **Konventionelle Auslegung[1]** | **Fraktionierungs-verfahren[2]** | **Erfindungsgemäßes Verfahren** |
|---|---|---|---|
| pro Takt [mL] | | | |
| [1] nach US 2 985 589<br>[2] nach Journal of Chromatography A 1122 (2006) 161 | | | |

**[0061]** Tabelle 1 zeigt ausgewählte Simulationsparameter für die Zielfunktion, das Produkt aus Raffinatreinheit- und produktivität multipliziert mit Extraktreinheit und -produktivität.

**[0062]** Die dimensionslosen Schnitt- und Zulaufpunkte ergeben sich aus der Diskretisierung einer Taktzeit in 23 (Fraktionierungsverfahren) bzw. 22 (erfindungsgemäßes Verfahren) Punkte. Die Volumendifferenz gibt an, dass bei den gewählten Bedigungen 0.0357 ml pro Schaltzeit mehr aus dem Tank gepumpt werden würden also durch Rückkopplung zugeführt werden kann. Diese Differenz wird durch einen passenden Strom reinen Lösemittels ausgeglichen.

Tabelle 2

| | Konventionelle -Auslegung[1] | Fraktionierungs-Verfahren[2] | Erfindungsgemäßes Verfahren | Steigerung/Senkung gegenüber den anderen Verfahren [%] | |
|---|---|---|---|---|---|
| | | | | Konventionell | Fraktionierung |
| Reinheit Raffinat [%]<br>Reinheit Extrakt [%] | 88,2<br>88,1 | 88,8<br>88,1 | 88,0<br>89,0 | -<br>- | |
| C Extrakt [g/L]<br>C Raffinat [g/L] | 0,106<br>0,220 | 0,305<br>0,279 | 0,326<br>0,319 | 208<br>45 | 7<br>14 |
| Produktmassen-strom A [mg/min]<br>Produktmassen-strom B [mg/min] | 0,173<br>0,19 | 0,311<br>0,460 | 0,338<br>0,363 | 96<br>90 | 9<br>-21 |
| Produktivität A [mg/mL*min]<br>Produktivität B [mg/mL*min] | 0,0166<br>0,0182 | 0,030<br>0,044 | 0,032<br>0,035 | 95<br>90 | 9<br>-21 |
| Eluensverbrauch EC A [mL/mg]<br>Eluensverbrauch EC B [mL/mg] | 14,91<br>13,55 | 9,71<br>6,57 | 6,57<br>6,13 | -56<br>-55 | -32<br>-7 |
| Ausbeute A [%]<br>Ausbeute B [%] | 77,2<br>85,0 | 44,6<br>66,0 | 79,3<br>85,0 | 3<br>0 | 78<br>29 |
| Verlust A [%]<br>Verlust B [%] | 11,5<br>10,4 | 45,9<br>22,1 | 10,5<br>10,8 | -9<br>4 | -77<br>-51 |
| [1] nach US 2 985 589<br>[2] nach *Journal of Chromatography* A 1122 (2006) 161 | | | | | |

**[0063]** In Tabelle 2 sind wichtige Leistungsparamter miteinander verglichen.

**[0064]** Die prozentuale Veränderung wird wie folgt berechnet:

$$\text{Veränderung[\%]} = \frac{100}{\text{Wert}_{\text{Konventionell / Fraktionierung}}} \text{Wert}_{\text{Erfindung}} - 100$$

Zu beachten ist, dass für Eluensverbrauch und Verlust ein kleinerer Wert besser ist. Im Folgenden sollen kurz die Definitionen angeführt werden.

Produktmassenstrom vom Raffinat für das Fraktionierungs- sowie das erfindungsgemäße Verfahren:

$$\dot{m}_i^{Ra} = \frac{Q_R * \int\limits_{(x-1)*T_S}^{(x-1)*T_S + T_{cut}} c_i(t)dt}{T_S}.$$

Für das klassische SMB-Verfahren gilt:

$$\dot{m}_i^{Ra} = \frac{Q_R * \int\limits_{(x-1)*T_S}^{x*T_S} c_i(t)dt}{T_S}$$

In allen Fällen wird der Produktmassenstrom im Extrakt wie folgt berechnet:

$$\dot{m}_i^{Ex} = \frac{Q_E * \int\limits_{(x-1)*T_S}^{x*T_S} c_i(t)dt}{T_S}$$

Die Raffinatreinheit ist:

$$Pur^{Ra} = 100 * \frac{\dot{m}_A^{Ra}}{\sum\limits_{r=1}^{NC} \dot{m}_r^{Ra}}$$

Die Extraktreinheit ist:

$$Pur^{Ex} = 100 * \frac{\dot{m}_B^{Ex}}{\sum\limits_{r=1}^{NC} \dot{m}_r^{Ex}}$$

Produktivität für Komponente A:

$$PR_A = \frac{\dot{m}_A^{Ra}}{\text{Säulenanzahl} * (1 - \varepsilon) * \text{Säulenvolumen}}$$

Produktivität für Komponente B:

$$PR_B = \frac{\dot{m}_B^{Ex}}{S\ddot{a}ulenanzahl * (1 - \varepsilon) * S\ddot{a}ulenvolumen}$$

Für den Lösemittelverbrauch (EC) gilt:

$$EC_A = \frac{Q_{Eluens} + Q_F}{\dot{m}_A^{Ra}} \quad bzw. \quad EC_B = \frac{Q_{Eluens} + Q_F}{\dot{m}_B^{Ex}}$$

Für die Ausbeute für das Fraktionierungs- und das erfindungsgemäße Verfahren gilt:

$$Yield_A = \frac{\dot{m}_A^{Ra}}{Q_F * c_A^F * T_{zulauf} / T_S}$$

$$Yield_B = \frac{\dot{m}_B^{Ex}}{Q_F * c_B^F * T_{zulauf} / T_S}$$

Für die Ausbeute für das konventionelle SMB-Verfahren gilt:

$$Yield_A = \frac{\dot{m}_A^{Ra}}{Q_F * c_A^F} \qquad\qquad Yield_B = \frac{\dot{m}_B^{Ex}}{Q_F * c_B^F}$$

Für den Verlust für das konventionelle und das erfindungsgemäße Verfahren gilt:

$$Verlust_A = \frac{\dot{m}_A^{Ex}}{Q_F * c_A^F * T_{zulauf} / T_S}$$

$$Verlust_A = \frac{\dot{m}_B^{Ra}}{Q_F * c_B^F * T_{zulauf} / T_S}$$

Für das Fraktionierungsverfahren gilt:

$$Verlust_A = \frac{\dot{m}_A^{Ex} + Q_R * \int\limits_{(j-1)^\bullet T_S + T_{cut}}^{j^\bullet T_S} c_A(t)dt}{Q_F * c_A^F * T_S} \qquad Verlust_B = \frac{\dot{m}_B^{Ra} + Q_R * \int\limits_{(j-1)^\bullet T_S + T_{cut}}^{j^\bullet T_S} c_B(t)dt}{Q_F * c_B^F * T_S}$$

Für den Fall einer exemplarisch gewählten Zielreinheit von mindestens 88 % wurde in Simulationsstudien ein breites Parameterfeld verwendet und daraus beispielhaft ein Arbeitspunkt ausgewählt, der für die Zielfunktion, den Quotienten aus dem Produkt aus Reinheit und Produktivität von Raffinat und Extrakt den höchsten Wert aufweist. Die sich daraus ergebenden Parameter sind in Tabelle 1 und die Leistungsparameter in Tabelle 2 zusammengefasst.

Zur Simulation der Anlage wurde das literaturbekannte Gleichgewichts-Dispersionsmodell (G. Golshan-Shirazi and A.M. Katti, Fundamentals of Preparative ans Nonlinear Chromatography, Academic Press, Boston, MA (1994) verwendet. Die numerische Berechnung erfolgt mit Hilfe des Rouchon-Algorithmus (P. Rouchon, M. Schonauer, P. Valentin and G. Guiochon, Sel. Sci. Technol. 22 (1987, p. 1793). Die Konzentrationen in Fest- und Flüssigphase sind über die Adsorptionsisotherme verknüpft. Im betrachteten Fall ist dies eine lineare Isotherme.

In Tabelle 1 von 2 werden vergleichsweise die Prozessparameter und Leistungsparameter für drei verschiedene angewendete Verfahren, nämlich eins nach dem US-Patent US 2 985 589 als konventionelles SMB-Verfahren, ein Fraktionierungsverfahren (Y.-S. Bae und C.-H. Lee, "Partial-discard strategy for obtaining high purity products using simulated movid bed Chromatography") und ein erfindungsgemäßes Verfahren dargestellt. Jedes dieser Verfahren wurde danach ausgewählt, dass bei einer gegebenen Mindestreinheit von 88 % möglichst maximale Werte für das Produkt aus Raffinatreinheit und Produktivität der Gewinnung von einer Komponente A sowie das Produkt aus Extraktreinheit und Produktivität der Gewinnung von einer Komponente B geliefert werden soll. Das Adsorbtionsverhalten beider Komponenten kann mit linearen Isothermen beschrieben werden.

Das erfindungsgemäße Verfahren ist in verschiedener Weise realisierbar. Der Produktauffangzeitraum innerhalb der Takteinheit bzw. der Taktzeit ist für den Fall der Raffinatrückkopplung durch den Beginn einer Takteinheit und den Zeitpunkt, an dem die integrale Reinheit den geforderten Schwellenwert unterschreitet, begrenzt. Somit ergibt sich ein Differenzzeitraum zwischen dem Ende des Produktauffangzeitraumes und dem Beginn der nächsten Takteinheit. Der innerhalb dieses Zeitraums austretende Strom erfüllt nicht mehr die Reinheitsanforderungen und wird in mindestens einem Tank gesammelt, dessen Inhalt ebenfalls in periodischen Abständen dem Eingang 45 zugeführt wird.

Im Falle einer Extraktrückkopplung steigt die integrale Reinheit mit zunehmender Taktdauer an und die Verschmutzung tritt zu Anfang einer Taktzeit ein. Die integrale Reinheit wird beginnend mit dem Ende der Takteinheit rückwärts in Richtung Taktanfang bestimmt. Somit ist der Produktauffangzeitraum begrenzt durch den Start des Sammelns und dem Ende der Takteinheit.

Sowohl bei einer Raffinat- als auch einer Extraktrückkopplung sowie bei einer Kombination dieser beiden ist die Leistungsfähigkeit dieses Verfahrens und der dieses Verfahren anwendenden Vorrichtung von der Dauer und dem Zeitpunkt der Rückkopplung beeinflusst.

Beispielsweise wird der austretende Strom nur bis zu einem Zeitpunkt aufgefangen, bevor der Schwellenwert unterschritten wird. Dies entspricht gemäß den Figuren 3 und 4 83 %. Dieser Teil wird in einem Produkttank im Anschluss an die Leitung 60 aufgefangen. Für die restlichen 17 % der Takteinheit wird der Raffinatstrom in dem Tank 62 aufgefangen. Aus diesem wird er dann alternierend, also abwechselnd mit der initialen Mehrkomponentenfluidmischung, dem Eingang 45 zugeleitet. Diese Rückkopplung eines Raffinatstromes, dessen Konzentrationsverhältnis typischerweise bereits zugunsten einer der Komponenten hin verschoben ist, führt dann erneut zu einer Erhöhung der Reinheit in dem von der Rückkopplung betroffenen abgegebenen Raffinatstrom 43.

Die Dauer der Rückkopplung wird maßgeblich durch die Auswahl des Produktauffangzeitraumes bestimmt. Die Rückkopplungsdauer liegt typischerweise zwischen dem Beginn der Takteinheit und dem Ende der Takteinheit. Für den Fall der Raffinatrückkopplung ist es vorteilhaft, den Rückfluss aus dem Tank 62 zu Anfang der Takteinheit zu realisieren. Für den Fall der Extraktrückkopplung sollte dies genau umgekehrt, also am Ende der Takteinheit sein.

Sobald der Zeitpunkt erreicht ist, an dem die Zielreinheit unterschritten wird, wird das Auslassventil 59 derart geschaltet, dass der Raffinatstrom für den Rest des Taktes in den Tank 62 umgeleitet wird. Das Zulaufventil regelt dann, wann der Zulauf in die Kammern über den Eingang 45 aus dem Tank 62 oder stattdessen der Zulauf der initialen Mehrkomponentenfluidmischung aus dem Behälter 64 stattfinden soll. Der Extraktstrom wird gemäß dieser Ausführungsform durchgehend aufgefangen und abgeführt.

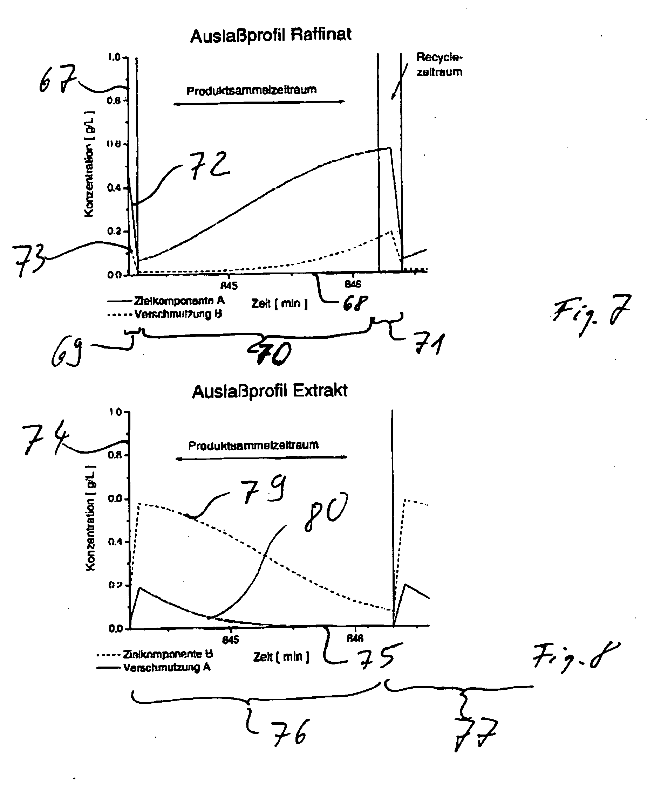

In Fig. 7 und Fig. 8 sind in Diagrammen die Konzentrationsprofile des Raffinatstromes und des Extraktstromes über die Ordinaten 67 bzw. 74 und die Abszissen 68 bzw. 75 in ihrem zeitlichen Verlauf wiedergegeben. Die Konzentrationsprofile werden für die Zielkomponente A mit dem Bezugszeichen 72, für die Zielkomponente B bei dem Extraktstrom mit dem Bezugszeichen 79, für die anteilige Verschmutzungskomponente B mit dem Bezugszeichen 73 und für die anteilige Verschmutzungskomponente A mit dem Bezugszeichen 80 wiedergegeben.

Ein Arbeitspunkt wurde aus einem durch Simulation ermittelten Datenfeld für eine exemplarisch ausgewählte Mindestreinheit von 88 % ausgewählt. Die betrachteten Bedingungen sind wiederum in der Tabelle 1 und die ermittelten Leistungsparameter in Tabelle 2 zusammengefasst.

Den Tabellen kann entnommen werden, dass die mittlere Auslasskonzentration der Komponente A im Raffinatstrom verglichen mit dem herkömmlichen Verfahren um 45 % und gegenüber dem Fraktionierungsverfahren ohne Rückkopplung um 14 % gesteigert worden ist. Die mittlere Auslasskonzentration an der Komponente B im Extraktstrom kann verglichen mit dem herkömmlichen Verfahren um 208 % gesteigert werden. Verglichen mit dem Fraktionierungsverfahren steigt sie um 7 %.

Der erzielbare Massestrom der Komponente A aus dem Raffinatstrom kann verglichen mit dem herkömmlichen Verfahren um 96 % und verglichen mit dem Fraktionierungsverfahren um 9 % gesteigert werden. Der erzielbare Massestrom der Komponente B aus dem Extraktstrom kann verglichen mit dem herkömmlichen Verfahren um 90 % gesteigert werden, verglichen mit dem Fraktionierungsverfahren sinkt er um 31 %. Dies geschieht jedoch auf Kosten einer deutlich schlechteren Ausbeute und eines hohen Verlustes an Komponenten.

Die Produktivität für die Komponente A aus dem Raffinatstrom kann verglichen mit dem herkömmlichen Verfahren um 95 % und verglichen mit dem Fraktionierungsverfahren um 9 % gesteigert werden. Die Produktivität für die Komponente B aus dem Extraktstrom kann verglichen mit dem herkömmlichen Verfahren um 90 % gesteigert werden.

Der spezifische Lösemittelverbrauch für die Komponente A aus dem Raffinatstrom wird verglichen mit dem herkömmlichen Verfahren um 56 % und verglichen mit dem Fraktionierungsverfahren um 32 % gesenkt. Der spezifische Lösemittelverbrauch für die Komponente B aus dem Extraktstrom wird verglichen mit dem herkömmlichen Verfahren um 55 % ,verglichen mit dem Fraktionierungsverfahren um 7 % gesenkt.

Die Ausbeute für die Komponente A aus dem Raffinatstrom kann verglichen mit dem herkömmlichen Verfahren um 3 % und gegenüber dem Fraktionierungsverfahren um 78 % gesteigert. Die Ausbeute für die Komponente B aus dem Extraktstrom bleibt auf demselben Niveau wie bei dem herkömmlichen Verfahren und steigt gegenüber dem Fraktionierungsverfahren um 29 %.

Der Verlust an der Komponente A liegt um 9 % unter dem Niveau des herkömmlichen Verfahrens, verglichen mit dem Fraktionierungsverfahren kann dieser um 77 % gesenkt werden. Der Verlust an der Komponente B steigt verglichen mit dem herkömmlichen Verfahren zwar um 4 %, wird aber gegenüber dem Fraktionierungsverfahren um 51 % gesenkt.

Gemäß den Abschnitten 70 und 71 wird der Produktsammelzeitraum, also derjenige Zeitraum in dem das Produkt mit der gewünschten Reinheit aus der gesamten Vorrichtung abgeführt wird, und der Recyclezeitraum, also derjenige Zeitraum, in dem der Raffinatstrom zu einer Rückkopplung abgetrennt wird, wiedergegeben. In dem Abschnitt 69 ist ein vorausgegangener Zyklus teilweise wiedergegeben. Zudem wird auch ein nachfolgender Zyklus teilweise wiedergegeben.

In den Abschnitten 76, 77 der Fig. 8 sind fast 2 Zyklen des Extraktstromes wiedergegeben.

Die Verbesserung der Leistungsfähigkeit gegenüber dem herkömmlichen Verfahren wird dadurch erreicht, dass die anvisierte Endreinheit der Ströme nicht mehr integral über die gesamte Taktzeit sondern nur bis zu einem früheren Zeitpunkt vorliegen muss. Aus diesem Grund sind höhere Feedströme und niedrigere Regenerationsströme möglich. Dies ermöglicht eine Erhöhung der Produktivität. Durch die Verringerung des Eluensverbrauchs sowie die Möglichkeit, auch mit wenig effizienten und somit günstigeren Feststoffen eine hohe Trennleistung zu erzielen, kann eine Senkung der Betriebskosten erreicht werden.

Das literaturbeschriebene Fraktionierungsverfahren hat ebenso den Vorteil, dass die gewünschte Zielreinheit nicht integral über die gesamte Schaltzeit vorliegen muss. Allerdings unterscheidet sich das erfindungsgemäße Verfahren in folgende Punkte vorteilhaft von dem Fraktionierungsverfahren.

Da der nicht als Produkt aufgefangene Volumenanteil nicht verworfen, sondern wieder eingebracht wird, kann die Ausbeute erhöht und der Verlust an Komponenten deutlich verringert werden. Die Rückkopplung selbst wirkt sich positiv auf die erzielbaren Reinheiten, und somit auch auf die Produktivität aus. Ist, wie im in Tab. 2 gezeigten Beispielfall, die Stärke der Wechselwirkung der Komponenten mit der festen Phase unabhängig von der Konzentration und anderer beteiligter Komponenten, liegen lineare Adsorptionsisothermen vor. Für den Fall der Raffinatrückkopplung ist es vorteilhaft, die vorgetrennte Mischung vor der initialen Mehrkomponentenfluidmischung aufzubringen. Auf diese Weise wird zu Anfang des Taktes eine geringere Menge der in diesem Auslass nicht erwünschten Komponenten aufgebracht. Durch eine erneute Passage der trennenden festen Phase wird die Reinheit weiter erhöht. Da die zu Anfang des Taktes in die Anlage eingebrachte Mischung auch zuerst den Ausgang erreicht, und bei dem betrachteten Fall der Raffinatrückkopplung der aufzufangende Anteil ebenfalls am Anfang liegt, kann bei gleichen Bedingungen bezüglichen der Arbeitspunkte der Trennung sowie des Sammelzeitraums in den Produkttank die zu erzielende Reinheit gegenüber dem Fraktionierungsverfahren gesteigert werden.

Dies gilt umgekehrt für den Fall der Extraktrückkopplung. Hier ist ein späteres Aufbringen des Inhalts des Recycletanks vorteilhaft.

Ist die Stärke der Wechselwirkung der Komponenten mit der festen Phase abhängig von der eigenen Konzentration sowie der anderen beteiligter Komponenten, liegen also nicht-lineare Adsorptionsisothermen vor, ist die Verbesserung der Reinheiten durch kompetitive Wechselwirkungen bedingt.

Selbstverständlich kann anstelle eines Behälters, der als Zwischenspeicher dient, jede Art von anderen Zwischenspeichern verwendet werden, wie beispielsweise Chromatographiesäulen.

Der Rückkopplungsstrom kann ebenso direkt ohne Zwischenspeicherung eingeleitet werden.

Das erfindungsgemäße Verfahren kann auf sämtliche erdenklichen und bisher bekannten SMB-Aufbauten angewendet werden, die beispielsweise weniger oder mehr als 4 Kammern aufweisen. Beispielsweise kann ein derartiger Aufbau aus 1 - 3 oder 5 und mehr Kammern bestehen.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| | |
|---|---|
| 1 | Mehrkomponentenfluidmischung (Feed) |
| 2 | Lösemittel |
| 3 | Raffinatstrom |
| 4 | Extraktstrom |
| 5, 6 | Eingänge |
| 7, 8 | Ausgänge |
| 9, 10, 11, 12 | Kammern |
| 17 | Pfeil |
| 18 | Pfeil |
| 19 | Konzentration (Ordinate) |
| 20 | Zeitverlauf (Abszisse) |
| 21 | zeitlicher Konzentrationsverlauf der Zielkomponente A |
| 22 | zeitlicher Konzentrationsverlauf der anteiligen Verschmutzungskomponente B |
| 23 | Konzentration (Ordinate) |
| 24 | Zeitverlauf (Abszisse) |
| 25 | zeitlicher Konzentrationsverlauf der Zielkomponente B |
| 26 | zeitlicher Konzentrationsverlauf der anteiligen Verschmutzungskomponente A |
| 27 | Reinheit in Gew.-% (Ordinate) |
| 28 | Zeitverlauf (Abszisse) |
| 29 | zeitlicher Verlauf der integralen Reinheit |
| 30 | zeitlicher Verlauf der differenziellen Reinheit |
| 31 | Pfeil |
| 41 | Mehrkomponentenfluidmischung |
| 43 | Raffinatstrom |
| 44 | Extraktstrom |
| 45 | Eingang |
| 47 | Ausgang |
| 48 | Ausgang |
| 49, 50, 51, 52 | Kammern |
| 53, 54, 55, 56 | Pfeile |
| 58 | Ableitung |
| 59 | Auslassventil |
| 60 | Umschaltung/Leitung |
| 61 | Richtung |
| 62 | Behälter/Tank |
| 63 | Ventil |
| 64 | Vorratstank/Behälter |
| 65 | Zuleitung |
| 66 | Zuleitungsleitung |
| 67, 74 | Konzentration (Ordinate) |
| 68, 75 | Zeitverlauf (Abszisse) |
| 69, 70, 71 | Abschnitte |
| 72 | Konzentrationsprofile Zielkomponente A bei dem Raffinatstrom |

| 73 | Konzentrationsprofile anteilige Verschmutzungskomponente B |
| 76, 77 | Abschnitte |
| 79 | Konzentrationsprofil Zielkomponente B bei dem Extraktstrom |
| 80 | Konzentrationsprofil anteilige Verschmutzungskomponente A |
| I, II, III, IV | Zonen |

**Patentansprüche**

1. Verfahren zur chromatographischen Trennung von Komponenten (72, 79) einer Mehrkomponentenfluidmischung mittels des Simulated Moving Bed Verfahrens, wobei die Mehrkomponentenfluidmischung (41) und mindestens ein Lösemittel (42) einer Mehrzahl von mindestens einen Feststoff enthaltenden Kammern (49 - 52) oder Kammerabschnitten an einem ersten und zweiten Eingang (45, 46) zugeführt werden, und ein Extraktstrom (44), der mindestens eine erste von der Mehrkomponentenfluidmischung (41) abgetrennte Komponenten (79) enthält, sowie ein Raffinatstrom (43), der mindestens eine zweite von der Komponentenfluidmischung (41) abgetrennte Komponente (72) enthält, aus den Kammern (49 - 52) oder Kammerabschnitten an einem ersten und zweiten Ausgang (47, 48) abgeleitet werden, wobei die Kammern (49 - 52) oder Kammerabschnitte einen geschlossenen Kreislauf (57) bildend in Reihen miteinander verbunden sind, und Anschlussstellen der jeweils zwischen zwei Kammern (49, 50; 50, 51; 51, 52; 52, 53) oder Kammerabschnitten des Kreislaufs (57) angeordneten ersten und zweiten Ein- und Ausgänge (45 - 48) nach Ablauf einer zyklischen Takteinheit zwischen zwei weiteren Kammern oder Kammerabschnitten des Kreislaufs neu positioniert werden,
**dadurch gekennzeichnet, dass**
der an dem ersten und/oder zweiten Ausgang (47, 48) abgeleitete Raffinatstrom (43) und/oder Extraktstrom (44) zumindest teilweise jeweils in mindestens einen Zwischenspeicher, insbesondere einen Behälter (62), zwischengelagert und in einer Takteinheit dem ersten und/oder zweiten Eingang (45, 46) abwechselnd oder zeitgleich mit der Mehrkomponentenfluidmischung (64) und/oder dem Lösemittel den Kammern oder Kammerabschnitten rückkoppelnd zugeführt (66) werden/wird.

2. Verfahren nach Anspruch 1,
**dadurch gekennzeichnet, dass**
die rückkoppelnde Zuführung (66) des abgeleiteten Raffinatstromes (43) und/oder Extraktstromes (44) innerhalb einer der erfolgten Ableitung (58) nachfolgenden Takteinheit durchgeführt wird.

3. Verfahren nach Anspruch 1
**dadurch gekennzeichnet, dass**
die rückkoppelnde Zuführung (66) des abgeleiteten Raffinatstromes (43) und/oder des Extraktstromes (44) innerhalb derselben Takteinheit, in der die Ableitung (58) erfolgt ist, durchgeführt wird.

4. Verfahren nach einem der vorangegangenen Ansprüche,
**dadurch gekennzeichnet, dass**
in mindestens einem ersten Zeitabschnitt der Takteinheit der gesamte abgeleitete Raffinatstrom (43) und/oder Extraktstrom (44) als Produkt mit gewünschtem Reinheitsgrad abgeführt wird (60) und in mindestens einem zweiten Zeitabschnitt der Takteinheit der gesamte abgeleitete Raffinatstrom und/oder Extraktstrom (43, 44) rückkoppelnd zugeführt (66) wird.

5. Verfahren nach einem der vorangegangenen Ansprüche,
**dadurch gekennzeichnet, dass**
ein Druck der zugeführten Mehrkomponentenfluidmischung (41) und/oder des Lösemittels (42) innerhalb einer Takteinheit stufenweise und/oder kontinuierlich verändert wird.

6. Verfahren nach einem der vorangegangenen Ansprüche,
**dadurch gekennzeichnet, dass**
eine Temperatur der zugeführten Mehrkomponentenfluidmischung (41) und/oder des Lösemittels (42) innerhalb einer Takteinheit stufenweise und/oder kontinuierlich verändert wird.

7. Verfahren nach einem der vorangegangenen Ansprüche,
**dadurch gekennzeichnet, dass**
die Zusammensetzung des Lösemittels sowie der Gehalt mindestens eines Modifikators in der Mehrkomponentenfluidmischung stufenweise und/oder kontinuierlich verändert wird.

8. Verfahren nach einem der vorangegangenen Ansprüche,
**dadurch gekennzeichnet, dass**
mindestens ein Feststoff verwendet wird, der dafür geeignet ist, in den einzelnen Kammern oder Kammerabschnitten unterschiedliche Wanderungsgeschwindigkeiten der einzelnen Komponenten der Mehrkomponentenfluidmischung hervorzurufen.

9. Verfahren nach Anspruch 8,
**dadurch gekennzeichnet, dass**
der Feststoff ein Adsorbensmaterial ist.

10. Verfahren nach einem der vorangegangenen Ansprüche,
**dadurch gekennzeichnet, dass**
als Lösemittel (42) eine Mischung aus einer Mehrzahl von Fluiden und/oder eine Mischung mindestens eines Fluids mit mindestens einem nieder- oder hochmolekularen Modifikator verwendet wird.

11. Verfahren nach einem der vorangegangenen Ansprüche,
**dadurch gekennzeichnet, dass**
als Lösemittel (42) und/oder Mehrkomponentenfluidmischung ein Gas oder eine Mischung aus einer Mehrzahl von Gasen verwendet wird, das/die im überkritischen oder unterkritischen Zustand ist/sind.

12. Verfahren nach einem der vorangegangenen Ansprüche,
**dadurch gekennzeichnet, dass**
das Lösemittel (42) zu trennende Komponenten enthält.

13. Verfahren nach Anspruch 12,
**dadurch gekennzeichnet, dass**
das Lösemittel mit den zu trennenden Komponenten und das Lösemittel ohne die zu trennenden Komponenten verschiedene Zusammensetzung und/oder Fähigkeiten hinsichtlich einer Beeinflussung eines Bindungsverhaltens der zu trennenden Komponenten gegenüber dem Feststoff aufweisen.

14. Verfahren nach einem der vorangegangenen Ansprüche,
**dadurch gekennzeichnet, dass**
in den Kammern (49 - 52) oder Kammerabschnitten eine chemische Reaktion zur Herstellung und Trennung von den Komponenten durchgeführt wird.

15. Verfahren nach einem der vorangegangenen Ansprüche,
**dadurch gekennzeichnet, dass**
die Anschlussstellen der ersten und zweiten Ein- und Ausgänge (45 - 48) zu verschiedenen Zeitpunkten neu positioniert werden.

16. Verfahren nach einem der vorangegangenen Ansprüche,
**dadurch gekennzeichnet, dass**
mindestens ein Volumenstrom der Mehrkomponentenfluidmischung (41), des Lösemittels (42), des Extraktstroms (44), des Raffinatstroms (43) und kreislaufintemer Zirkulationsströme innerhalb einer Takteinheit stufenweise und/oder kontinuierlich verändert wird.

17. Verfahren nach einem der vorangegangenen Ansprüche,
**dadurch gekennzeichnet, dass**
der Kreislauf ein offener Kreislauf ist.

18. Vorrichtung zur Durchführung des Verfahrens nach einem der vorangegangenen Ansprüche,
**dadurch gekennzeichnet, dass**
mindestens drei Kammern (49 - 52) mit dazwischen liegenden Ein- bzw. Ausgängen (45 - 48) vorhanden sind, wobei zur Abzweigung desjenigen Anteils des abgeleiteten Raffinatstromes (43) oder Extraktstromes (44) zusätzlich ein erstes Ventil (59), welches zwischen dem aus der Vorrichtung abzuführenden Strom (60) und dem rückzuführenden Strom (61) umschaltet, und ein zweites Ventil (63), welches zwischen der zuzuführenden Mehrkomponentenfluidmischung (41) und dem in der Vorrichtung rückzuführenden Strom (66) umschaltet, angeordnet sind, und zwischen dem ersten Ventil (59) und dem zweiten Ventil (63) mindestens ein Behälter (62) zum Zwischenspeichern bzw. Zwischenlagern des abgezweigten Stromes (61), angeordnet ist.

**Claims**

1. A method for the chromatographic separation of components (72, 79) of a multicomponent fluid mix by means of the Simulated Moving Bed method, wherein the multicomponent fluid mix (41) and at least one solvent (42) are fed to a first and second inflows (45, 46) of a plurality of chambers (49 - 52) or chamber sections containing at least one solid substance, and an extract stream (44) containing at least one first component (79) separated from the multicomponent fluid mix (41) as well as a raffinate stream (43) containing at least one second component (72) separated from the component fluid mix (41) are carried out of the chambers (49 - 52) or chamber sections through a first and second outflows (47, 48), wherein the chambers (49 - 52) or chamber sections are connected to each other in series to form a closed loop (57), and connection ports of the first and second inflows and outflows (45 - 48) respectively disposed between two chambers (49, 50; 50, 51; 51, 52; 52, 53) or chamber sections of the loop (57) are newly positioned at the end of the cyclic clock unit between two further chambers or chamber sections of the loop,
**characterised in that** at least part of the raffinate stream (43) and/or the extract stream (44) diverted from the first and/or second outflow(s) (47, 48) is/are preliminarily stored respectively in at least one preliminary store, in particular a container (62), and is/are recirculated (66) to the first and/or the second inflow(s) (45, 46) of the chambers or chamber sections within one clock unit alternately or simultaneously with the multicomponent fluid mix (64) and/or the solvent.

2. The method as claimed in Claim 1, **characterised in that** the recirculation (66) of the diverted raffinate stream (43) and/or extract stream (44) is carried out within the clock unit following the outfeed (58).

3. The method as claimed in Claim 1, **characterised in that** the recirculation (66) of the diverted raffinate stream (43) and/or extract stream (44) is carried out within the same clock unit in which the outfeed (58) takes place.

4. The method as claimed in any one of the preceding claims, **characterised in that** in at least one first time section of the clock unit, the entire diverted raffinate stream (43) and/or extract stream (44) is/are lead away as a product with the desired degree of purity (60) and the entire diverted raffinate stream and/or extract stream (43, 44) is recirculated (66) within at least one second time section of the clock unit.

5. The method as claimed in any one of the preceding claims, **characterised in that** a pressure of the infed multicomponent fluid mix (41) and/or the solvent (42) is modified within one clock unit in a stepwise and/or continuous mode.

6. The method as claimed in any one of the preceding claims, **characterised in that** a temperature of the infed multicomponent fluid mix (41) and/or of the solvent (42) is modified within one clock unit in a stepwise and/or continuous mode.

7. The method as claimed in any one of the preceding claims, **characterised in that** the composition of the solvent as well as the content of at least one modifier in the multicomponent fluid mix is modified in a stepwise and/or continuous mode.

8. The method as claimed in any one of the preceding claims, **characterised in that** at least one solid substance is used, which is suitable for causing different velocities of movement of the individual components of the multicomponent fluid mix in the individual chambers or chamber sections.

9. The method as claimed in Claim 8, **characterised in that** the solid substance is an adsorbent material.

10. The method as claimed in any one of the preceding claims, **characterised in that** a mixture of a plurality of fluids and/or a mixture of at least one fluid with at least one low or high molecular modifier is used as a solvent (42).

11. The method as claimed in any one of the preceding claims, **characterised in that** a gas or a mixture of a plurality of gases which is/are in the supercritical or the sub-critical condition is/are used as the solvent (42) and/or the multicomponent fluid mix.

12. The method as claimed in any one of the preceding claims, **characterised in that** the solvent (42) contains components to be separated.

13. The method as claimed in Claim 12, **characterised in that** the solvent including the components to be separated and the solvent without the components to be separated have different compositions and/or capacities with regard to influencing a binding behaviour of the components to be separated compared to the solid substance.

14. The method as claimed in any one of the preceding claims, **characterised in that** a chemical reaction for producing and separating the components is carried out in the chambers (49 - 52) or chamber sections.

15. The method as claimed in any one of the preceding claims, **characterised in that** the connection ports of the first and the second inflows and outflows (45 - 48) are newly positioned at different points in time.

16. The method as claimed in any one of the preceding claims, **characterised in that** at least one volume stream of the multicomponent fluid mix (41), the solvent (42), the extract stream (44), the raffinate stream (43) and the incircuit circulation streams is modified within one clock unit in a stepwise and/or continuous mode.

17. The method as claimed in any of the preceding claims, **characterised in that** the loop is an open loop.

18. A device for performing the method as claimed in any one of the preceding claims,
    **characterised in that**
    at least three chambers (49-52) with intermediate inflows and outflows (45-48) are provided, wherein for branching off this part of the diverted raffinate stream (43) or the extract stream (44) additionally a first valve (59) switching between the stream (61) to be discharged out of the device and the stream (61) to be recirculated, and a second valve (63) switching between the multicomponent fluid mixture (41) to be supplied and the stream (66) to be recirculated in the device, are provided, and at least one container (62) is provided between the first valve (59) and second valve (63) for preliminary storage of preliminary buffering of the branched off stream (61).

## Revendications

1. Procédé pour la séparation chromatographique de composants (72, 79) d'un mélange fluide à composants multiples en utilisant le procédé à lit mobile simulé, dans lequel le mélange fluide à composants multiples (41) et au moins un solvant (42) sont acheminés à une pluralité de chambres (49 à 52) ou de sections de chambres contenant au moins un solide, à une première et une seconde entrées (45, 46), et dans lequel un courant d'extraction (44), qui contient au moins un premier composant (79) séparé du mélange fluide à composants multiples (41), ainsi qu'un courant de raffinat (43), qui contient au moins un second composant (72) séparé du mélange fluide à composants multiples (41), sont évacués des chambres (49 à 52) ou des sections de chambres à une première et une seconde sorties (47, 48), les chambres (49 à 52) ou les sections de chambres étant reliées en série l'une à l'autre en formant un circuit fermé (57), et des points de raccordement des premières et des secondes entrées et sorties (45 à 48) aménagées, respectivement, entre deux chambres (49, 50 ; 50, 51 ; 51, 52 ; 52, 53) ou sections de chambres du circuit (57) étant repositionnés entre deux autres chambres ou sections de chambres du circuit après déroulement d'une unité de période cyclique,
   **caractérisé en ce que**
   le courant de raffinat (43) et/ou le courant d'extraction (44) évacués par la première et/ou la seconde sorties (47, 48) est ou sont respectivement entreposés, au moins en partie, dans au moins un réservoir intermédiaire, en particulier dans un récipient (62), et est ou sont réinjectés (66) dans une unité de période, par la première et/ou la seconde entrées (45, 46), dans les chambres ou les sections de chambres en alternance ou simultanément avec le mélange fluide à composants multiples (64) et/ou avec le solvant.

2. Procédé selon la revendication 1,
   **caractérisé en ce que**
   la réinjection (66) du courant de raffinat (43) et/ou du courant d'extraction (44) évacués est effectuée dans une unité de période suivant l'évacuation (58) effectuée.

3. Procédé selon la revendication 1,

**caractérisé en ce que**

la réinjection (66) du courant de raffinat (43) et/ou du courant d'extraction (44) évacués est effectuée dans la même unité de période que celle à laquelle l'évacuation (58) est effectuée.

**4.** Procédé selon l'une quelconque des revendications précédentes,
**caractérisé en ce que**
l'on prélève (60), dans au moins un premier intervalle de temps de l'unité de période, l'intégralité du courant de raffinat (43) et/ou du courant d'extraction (44) évacués comme produit d'un degré de pureté souhaité, et **en ce que**
l'on réinjecte (66), dans au moins un second intervalle de temps de l'unité de période l'intégralité du courant de raffinat et/ou du courant d'extraction (43, 44) évacués.

**5.** Procédé selon l'une quelconque des revendications précédentes,
**caractérisé en ce que**
l'on modifie par paliers et/ou en continu, dans une unité de période, une pression du mélange fluide à composants multiples (41) et/ou du solvant (42) acheminés.

**6.** Procédé selon l'une quelconque des revendications précédentes,
**caractérisé en ce que**
l'on modifie par paliers et/ou en continu, dans une unité de période, une température du mélange fluide à composants multiples (41) et/ou du solvant (42) acheminés.

**7.** Procédé selon l'une quelconque des revendications précédentes,
**caractérisé en ce que**
l'on modifie par paliers et/ou en continu la composition du solvant, ainsi que la teneur en au moins un agent modificateur du mélange fluide à composants multiples.

**8.** Procédé selon l'une quelconque des revendications précédentes,
**caractérisé en ce que**
l'on utilise au moins un solide qui convienne pour déclencher, dans les chambres ou dans les sections de chambres individuelles, différentes vitesses de migration des composants individuels du mélange fluide à composants multiples.

**9.** Procédé selon la revendication 8,
**caractérisé en ce que**
le solide est un matériau de type adsorbant.

**10.** Procédé selon l'une quelconque des revendications précédentes,
**caractérisé en ce que**
l'on utilise comme solvant (42) un mélange composé d'une pluralité de fluides et/ou un mélange d'au moins un fluide avec au moins un agent modificateur de poids moléculaire faible ou élevé.

**11.** Procédé selon l'une quelconque des revendications précédentes,
**caractérisé en ce que**
l'on utilise comme solvant (42) et/ou comme mélange fluide à composants multiples, un gaz ou un mélange d'une pluralité de gaz, lequel ou lesquels se présente(nt) dans un état supercritique ou sous-critique.

**12.** Procédé selon l'une quelconque des revendications précédentes,
**caractérisé en ce que**
le solvant (42) contient des composants à séparer.

**13.** Procédé selon la revendication 12,
**caractérisé en ce que**
le solvant avec les composants à séparer et le solvant sans les composants à séparer présentent une composition différente et/ou des capacités différentes quant à une influence sur le comportement de liaison des composants à séparer vis-à-vis du solide.

**14.** Procédé selon l'une quelconque des revendications précédentes,
**caractérisé en ce que**

l'on effectue dans les chambres (49 à 52) ou dans les sections de chambres une réaction chimique destinée à la fabrication et à la séparation des composants.

**15.** Procédé selon l'une quelconque des revendications précédentes,
**caractérisé en ce que**
les points de raccordement des premières et des secondes entrées et sorties (45 à 48) sont repositionnés à divers moments dans le temps.

**16.** Procédé selon l'une quelconque des revendications précédentes,
**caractérisé en ce que**
l'on modifie par paliers et/ou en continu au moins un courant volumique du mélange fluide à composants multiples (41), du solvant (42), du courant d'extraction (44), du courant de raffinat (43) et des courants de circulation internes au circuit dans une unité de période.

**17.** Procédé selon l'une quelconque des revendications précédentes,
**caractérisé en ce que**
le circuit est un circuit ouvert.

**18.** Dispositif pour la réalisation du procédé selon l'une quelconque des revendications précédentes,
**caractérisé en ce que**
celui-ci comprend au moins trois chambres (49 à 52) avec des entrées ou des sorties (45 à 48) disposées entre elles, dans lequel on a aménagé en outre, en vue de l'embranchement de chaque fraction du courant de raffinat (43) ou du courant d'extraction (44) évacués, une première vanne (59), qui effectue un changement entre le courant (60) à évacuer du dispositif et le courant à réinjecter (61), et une seconde vanne (63), qui effectue un changement entre le mélange fluide à composants multiples (41) à acheminer et le courant (66) à réinjecter dans le dispositif, et dans lequel on a aménagé entre la première vanne (59) et la seconde vanne (63) au moins un récipient (62) dans le but de stocker temporairement ou d'entreposer temporairement le courant dérivé (61).

Fig. 1

Fig. 2

## Auslaßprofil Raffinat

**Fig 3**

## Auslaßprofil Extrakt

**Fig. 4**

Fig. 5

Reinheit < Zielreinheit     61     Reinheit => Zielreinheit

Auslassventil     59   Raffinat    60

62 — Tank   typischerweise
angereichert
an Komponente
A

$Q_R$   58    A   43

56    51    47
53   52

Zone III     Zone IV    57

$Q_F$   Schaltrichtung
der
Säulen

$Q_{Eluens}$

Zulaufventil    Feed    Lösemittel

63 —   41    54    42

65    Zone II   45    55    Zone I   49

64 — A + B    66    50   $Q_E$   46

48   Extrakt
B

44    Fig. 6

## Auslaßprofil Raffinat

Fig. 7

## Auslaßprofil Extrakt

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2985589 A
- US 5102553 A
- WO 0025885 A
- US 2006023459 A
- WO 2004014511 A
- US 2985589 B

### In der Beschreibung aufgeführte Nicht-Patentliteratur

- **Y.-S. BAE ; C.-H. LEE.** Partial-discard strategy for obtaining high purity products using simulated movid bed Chromatography. *Journal of Chromatography A,* 2006, vol. 1122, 161-173
- *Journal of Chromatography A,* 2006, vol. 1122, 161-173
- *Journal of Chromatography A,* 2006, vol. 1122, 161
- **G. GOLSHAN-SHIRAZI ; A.M. KATTI.** Fundamentals of Preparative ans Nonlinear Chromatography. Academic Press, 1994
- **P. ROUCHON ; M. SCHONAUER ; P. VALENTIN ; G. GUIOCHON.** *Sel. Sci. Technol.,* 1987, vol. 22, 1793